(19) **Europäisches Patentamt**
**European Patent Office**
**Office européen des brevets**

(11) **EP 4 324 331 B1**

(12) **EUROPEAN PATENT SPECIFICATION**

(45) Date of publication and mention
of the grant of the patent:
**04.03.2026 Bulletin 2026/10**

(21) Application number: **23189663.0**

(22) Date of filing: **04.08.2023**

(51) International Patent Classification (IPC):
**A23C 11/10** (2025.01)   **A23D 7/005** (2006.01)
**A23J 3/34** (2006.01)   **A23K 20/147** (2016.01)
**A23L 33/185** (2016.01)   **A23J 1/14** (2006.01)
**A23J 3/14** (2006.01)

(52) Cooperative Patent Classification (CPC):
**A23J 1/14; A23C 11/103; A23D 7/0053;
A23J 1/142; A23J 1/148; A23J 3/14; A23J 3/30;
A23J 3/346; A23L 33/185;** A23K 10/30;
A23K 20/147

(54) **METHOD TO PRODUCE A CLEAR PROTEIN INGREDIENT FROM SUNFLOWERSEEDS**

METHODE ZUR HERSTELLUNG EINER HELLEN PROTEINZUTAT AUS SONNENBLUMENSAMEN

PROCEDE DE PREPARATION D'UN INGREDIENT PROTEINIQUE LUCIDE DE GRAINS DE TOURNESOL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.08.2022 IT 202200016812**

(43) Date of publication of application:
**21.02.2024 Bulletin 2024/08**

(73) Proprietor: **Cereal Docks S.p.A.**
**36043 Camisano Vicentino (VI) (IT)**

(72) Inventors:
• **COSTANZO, Enrico**
**36043 Padova (PD) (IT)**
• **CESTONARO, Giulia**
**36043 Camisano Vicentino (VI) (IT)**
• **TITTON, Greta**
**36043 Camisano Vicentino (VI) (IT)**
• **NATALONI, Luigi**
**36043 Bologna (BO) (IT)**

(74) Representative: **Biggi, Cristina**
**Bugnion S.p.A.**
**Viale Lancetti 17**
**20158 Milano (IT)**

(56) References cited:
**RU-C1- 2 767 364**   **US-A1- 2003 060 607**
**US-A1- 2012 009 287**

• **GHEYASUDDIN S ET AL: "preparation of a
colorless sunflower Protein isolate", FOOD
TECHNOLOGY,, vol. 24, no. 242, 1 March 1970
(1970-03-01), pages 36 - 37, XP001349348**
• **PICKARDT CLAUDIA ET AL: "Pilot plant
preparation of light-coloured protein isolates
from de-oiled sunflower (Helianthus annuus L.)
press cake by mild-acidic protein extraction and
polyphenol adsorption", vol. 44, 1 February 2015
(2015-02-01), NL, pages 208 - 219, XP093116387,
ISSN: 0268-005X, Retrieved from the Internet
<URL:https://pdf.sciencedirectassets.com/
271995/1-s2.0-S0268005X14X00068/
1-s2.0-S0268005X14003269/main.pdf?
X-Amz-Security-Token=IQoJb3JpZ2luX2VjEPj/////
/////wEaCXVzLWVhc3QtMSJHMEUCIQDkN0L9
+kuBo+PeC1M+yVEqaRztfYuZhdP9J1MWg5
+2xQIgP+QkPioOIxJZBoErQSa2D9bRvXs
+SDLRHr05s3/nSfUqvAUIkf//////////
ARAFGgwwNTkwMDM1N> DOI: 10.1016/
j.foodhyd.2014.09.020**

EP 4 324 331 B1

**Description**

**TECHNICAL FIELD**

The present invention relates to a method to produce a light-coloured protein ingredient (from beige-white CIELAB 95.35, 0.47, 3.96, HEX: #f6f1ea to dove grey CIELAB 69.6, 3.43, 15.07, HEX: #bba78f) from sunflower seeds.
The subject matter of the invention also relates to the light-coloured protein ingredient obtained with the method of the invention.

**STATE OF THE ART**

Plant protein-based preparations are becoming increasingly important for human and animal diets, in consideration of the growing problems of environmental sustainability. As is by well known, in fact, foods of animal origin, such as meat and dairy products, have a large impact in terms of land use, water consumption and greenhouse-effect carbon dioxide emissions. Furthermore, nearly 90% of the energy contained in the feed consumed by animals is lost just to keep them alive: accordingly, between pastures and land where feed crops are grown, livestock exploit over 80% of the planet's farmland, while they produce only 18% of the calories needed globally and 37% of the proteins (Poore et al., Science 360, 987-992 (2018)).
Food production causes a so-called "carbon opportunity cost", which indicates the amount of carbon dioxide emitted to produce a food along the whole supply chain. By calculating the impact of livestock farming on food production, scholars have shown that pastures represent the largest part (72%) of the carbon opportunity cost of animal proteins, while animal feed croplands account for the remaining 28%.
In this context, in order to avoid the collapse of the planet's ecosystem, it is necessary to drastically decrease the consumption of animal products and favour a plant-based diet.
One source of proteins of plant origin that are useful for human and animal diets is represented by oilseeds, and in particular sunflower seeds, which are customarily pressed to extract sunflower oil. The residue (also called cake in the case of cold pressing) of the sunflower seed pressing process is presently used as an animal feed, even though its use poses disadvantages tied to the partial presence of the sunflower seed hulls and the presence of undesirable impurities. The latter are secondary plant substances such as polyphenols, including chlorogenic acid, whose oxidation gives rise to an undesirable dark green colour of the protein isolates from sunflower, as well as tannins and phytic acid, the latter being an anti-nutritional factor. These components can reach high cumulative levels in residues and considerably alter the colour, flavour, and digestibility of the proteins. The press cakes and extraction residues of the processes for obtaining sunflower oil are thus not suitable for producing high-quality protein ingredients for foods or feeds for human or animal consumption without further processing.
There exist various processes for obtaining protein concentrates and/or isolates from oilseeds such as sunflower seeds, which are aimed at obtaining a light-coloured protein product suitable for food use.
For example, United States patent US3622556 describes the extraction of proteins from defatted sunflower seeds at an alkaline pH of between 9 and 11, wherein the alkali extraction process is carried out under an inert gas blanket to prevent the appearance of an intense green colour. Furthermore, before the protein precipitation step, carried out at a pH of between 3.25 and 6, there is an ultrafiltration step to remove the polyphenolic components and thereby prevent the reappearance of the green colour at a later time.
In United States patent US3993636, Maubois et al. describe a method for extracting proteins from sunflower seed meal by treating the proteins in an alkaline solution with ultrafiltration, using a semi-permeable membrane with a pore size of between 0.1 and 30 mµ.
United States patent US4435319 describes a method for obtaining a sunflower seed protein isolate without a dark colour through repeated precipitation and resuspension steps until the required colour is reached.
European patent EP3295803 relates to a general method for removing fibres from an oilseed meal for the production of edible protein products, based on the use of ethanol as a solvent.
In European patent EP3669662, Galet et al. describe the production of a sunflower seed protein isolate through a process based on ultrafiltration and with the adoption of an aqueous NaCl solution for diafiltration.
With the aim of obtaining a light-coloured protein isolate from sunflower, other processes comprise wet extraction steps with low oxygen concentration values (less than 7 mg/l) and the use of an antioxidant (US2022007679; RU2767364).
In particular, it should be noted that the process described in RU2767364 is not reproducible due both to the absence of instructions for the mixing between sulphites and hydrogen peroxide and the lack of indications as to the amount to be used for said substances. In fact, the mixing, in the same step, of a reducing agent and an oxidising agent without any specifications regarding the sequence of the steps and without any indication as to the amount to be used makes the reaction between them uncontrolled. Furthermore, patent RU2767364 does not describe the purpose of mixing sulphites and hydrogen peroxide, which, in the present invention, is carried out at an acidic pH in order to transform the sulphites into sulphates thanks to the hydrogen peroxide, sulphites being one of the major allergens. In the process described in RU2767364, by contrast, the pH indicated is always a basic pH (range indicated as between pH 8.5 and pH 11), which is known to chemically penalise the reaction of transformation, by hydrogen peroxide, of sulphites into sulphates, as shown for example by J. Phys. Chem. 1975, 79, 20, 2096-2098.

Furthermore, documents on protein preparations have been published in the literature and protein preparations based on sunflower seeds with a protein content exceeding a mass percent of 70%, in some cases over 90%, have been available on the market for some time.

However, though their high protein content makes the potential application of such preparations considerably higher than that of meals and concentrates, due to their low brightness values, discolouring (green, beige-brownish colour tones), low protein solubility <10% and unpleasant flavours, i.e. low palatability, these preparations too cannot be widely used in applications with strict sensory standards. Furthermore, the processes are often very complex and involve various extractions with solvents (for example Saeed and Cheryan, 1988, "Sunflower Protein Concentrates and Isolates' Low in Polyphenols and Phytate", Journal of Food Science, 53 (4), 1127-1131) and/or aqueous extractions using different pH values and various precipitation steps. Furthermore, though the sunflower seeds are dehulled in this method, they are often also deoiled with solvents immediately afterwards, without partial mechanical deoiling or by defatting with propane, which further reduces the possibility of use in the food industry.

In addition, there are other known approaches aimed at improving the solubility of sunflower protein during extractive recovery with the aid of the addition of common salt or other salts (Pickardt et al. 2009, "Optimization of mild-acidic protein extraction from defatted sunflower (Helianthus annuus L.) meal", Food Hydrocolloids, 23(7), 1966-1973.; EP3669662).

However, preparations of this type have a very salty flavour after extraction in concentrated aqueous solutions with salt; hence, processes of this type do not allow satisfactory products to be obtained at a low cost.

Thus, there is a felt need for effective, inexpensive processes for obtaining protein ingredients from sunflower seeds, in particular protein concentrates and protein isolates suitable for human and animal diets, as there is felt need for protein ingredients, in particular protein concentrates and protein isolates, with improved organoleptic qualities (colour and flavour) and improved digestibility.

## DEFINITIONS

Unless otherwise defined, all the terms of the art, notations and other scientific terms used herein are intended to have the meanings commonly understood by those skilled in the art to which this description pertains. In some cases, terms with commonly understood meanings are defined herein for the sake of clarity and/or for ease of reference; the inclusion of such definitions in the present description should thus not be interpreted as representing a substantial difference from what is generally understood in the art.

The terms "comprising", "having", "including" and "containing" are to be understood as open-ended terms (i.e. the meaning of "comprising, but not limited to") and are to be considered as a support also for terms like "consist essentially of", "consisting essentially of", "consist of" or "consisting of".

For all the ranges specified in the text, in the figures and in the claims of the present patent application, it is understood that the endpoints of these ranges are included. The terms "obtainable", "obtained", "obtainable directly from", and "obtained directly from" are considered equivalent.

"Protein isolate" means a protein preparation with a protein content equal to at least 80% by weight out of the dry weight.

"Protein concentrate" means a protein preparation with a protein content of less than 80% by weight out of the dry weight, but at least equal to 70% by weight out of the dry weight.

"Meal" and "protein meal" mean a protein preparation with a protein content equal to or greater than 50% by weight out of the dry weight and less than 70% by weight out of the dry weight

"Cake" means the residue of the sunflower seed cold pressing process. Therefore, when sunflower seeds are defatted (defatted seeds) with the cold pressing process, they are also called "cake"

"Room temperature" means a temperature of between 5° C and 35° C.

"PVPP" means polyvinylpolypyrrolidone.

"Rpm" means "revolutions per minute".

"RCF" means "relative centrifugal force", equivalent to gravitational acceleration "g". In the text, the symbol "RCF" is normally used for centrifugal apparatus.

"Solubility" means the percentage of proteins, measured by means of the total Kjeldahl N *6.25 method (ISO 1871:2009), in aqueous solution at pH 7 after dispersion of the ingredient protein in a meal:water ratio of 5% (weight/volume) and precipitation of the undissolved solid material by centrifugation.

"Water holding capacity" (WHC) means the amount of water expressed in grams retained per gram of protein ingredient. The test is performed by mixing the water and the protein ingredient for 1 minute. Then the mixture is centrifuged and the supernatant is removed. The water holding capacity is determined by weighing the wet precipitate, in order to check the difference in weight compared to the starting powder.

"Oil holding capacity" (OHC) means the amount of oil expressed in grams retained per gram of protein ingredient. The test is performed by mixing the oil and the protein ingredient for 1 minute. Then the samples are centrifuged and the supernatant is removed. The oil holding capacity is determined by weighing the wet precipitate, in order to check the difference in weight compared to the starting powder.

The "gelling capacity" or "capacity to create a gel" is an assessment of the capacity to form a gel and is expressed as a minimum percentage of the protein ingredient in water (weight/weight) necessary to create a stable gel. In the analysis, the different ratios between the protein ingredient and water are studied by heating the samples and leaving them to rest overnight in a refrigerator. Gel formation occurs when the protein lattice retains all the water used.

The "capacity to create an emulsion" is expressed as a percentage. It is evaluated by preparing a solution with a precise ratio between the protein ingredient, water and sunflower oil. During mixing with a high-speed homogenizer, the oil is slowly added to the solution in the same amount as the initial water, thereby creating a first emulsion. The mixture is then centrifuged. The "emulsion capacity" is the percentage of emulsion (emulsified layer) that remains after centrifugation, in reference to the first emulsion.

## SUMMARY OF THE INVENTION

The subject matter of the present invention relates to a method to produce a light-coloured protein ingredient (from white-beige CIELAB 95.35, 0.47, 3.96, HEX: #f6f1ea to dove grey CIELAB 69.6, 3.43, 15.07 HEX: #bba78f) from a dehulled sunflower seed meal, said method being characterized by the use of water as a solvent to extract the proteins and the absence of ultrafiltration steps to concentrate the proteins.

The protein ingredient obtained with the method of the invention can be a protein concentrate or a protein isolate.

The invention also relates to the light-coloured protein concentrate obtained with the method of the invention, characterized by a protein content by weight of at least 70% on a dry basis, and less than 80% on a dry basis, preferably at least 75% on a dry basis and less than 80% on a dry basis, and a total fat content by weight on a dry basis between 10% and 27%.

The invention also relates to the light-coloured protein isolate obtained with the method of the invention, characterized by a protein content by weight at least of 80% on a dry basis, preferably at least 85%, more preferably at least 90% or more and a total fat content by weight on a dry basis of between 5% and 20%.

Furthermore, the invention also relates to the use of the protein ingredient of the invention (protein concentrate or isolate) in food and feed preparations for human and animal consumption, wherein the protein ingredient of the invention can be the main ingredient or a functional ingredient. In fact, the protein ingredient of the invention can be used as a replacement for proteins originating from other sources, or it can be used to supplement them and/or to replace other functional ingredients (e.g. lecithins as regards emulsion capacity), thus contributing to reduce the overall number of ingredients on the label of the finished product ("clean label").

Finally, disclosed are (not according to the invention) food or feed preparations comprising the protein ingredient of the invention, said food or feed preparations being, by way of example, a plant-based drink, preferably a plant-based milk substitute for human consumption, a protein cracker enriched with said protein ingredient and a mayonnaise.

## DETAILED DESCRIPTION OF THE INVENTION

The subject matter of the present invention relates to a method to produce a protein ingredient from sunflower seeds that is light-coloured, preferably from white-beige CIELAB 95.35, 0.47, 3.96, HEX: #f6f1ea to dove grey CIELAB 69.6, 3.43, 15.07, HEX: #bba78f, with a pH of between $6.0 \pm 0.5$ and $7.0 \pm 0.5$, strongly recommended in the food industry..

Particularly preferred PANTONE® colours of the protein ingredient obtained with the method of the invention are: PANTONE® 11-0605 TCX (CIELAB L 91.63, a 1, b 4.72), PANTONE® 11-0105 TCX (CIELAB L 90.6, a 0.57, b 9.5), and PANTONE® 13-1008 TCX (CIELAB L 82.59, a 0.97, b 13.71).

The protein ingredient obtained with the method of the invention can be a protein concentrate or a protein isolate.

The protein concentrate obtained with the method of the invention is likewise an object of the present invention and is defined in claim 14, the protein content is determined according to the total Kjeldahl N *6.25 method (ISO 1871:2009), and the fat content is determined according to the method described in "Rapporti ISTISAN 1996/34 Met" on page 41).

The invention also relates to the light-coloured protein isolate obtained with the method of the invention, as defined in claim 15, the protein content is determined according to the total Kjeldahl N *6.25 method (ISO 1871:2009), and the fat content is determined according to the method described in "Rapporti ISTISAN 1996/34 Met" on page 41).

The method of the invention comprises the following sequential steps for obtaining a protein ingredient of dietary interest from a meal of dehulled sunflower seeds defatted mechanically or by defatting with propane:

I) solubilizing of sunflower seed meal in water, at a pH of between 5 and 8 and addition of at least one sulphite of an alkali or alkaline earth metal, preferably sodium sulphite, sodium bisulphite, sodium metabisulphite, calcium sulphite, calcium bisulphite, calcium metabisulphite, potassium sulphite, potassium bisulphite, potassium metabisulphite and even more preferably sodium sulphite;

II) aqueous extraction of the proteins at an alkaline pH and precipitation of the proteins at an acidic pH;

III) addition of hydrogen peroxide at an acidic pH, preferably at pH $\leq 4.25$, and even more preferably at a pH of between pH 3.25 and pH 4.25 and neutralization of the precipitate;

IV) enzymatic degradation of residual hydrogen peroxide.

According to a preferred aspect, after step I and prior to step II, a step Ia) of enzymatic deoiling and defatting can be performed.

The sunflower seeds are dehulled to remove the dark shells rich in fibre, thereby obtaining a light-coloured starting product with a higher protein concentration compared to the unhulled product: the protein concentration of the starting product is in fact equal to or greater than 20% of the dry matter.

The sunflower seeds are at least 50% dehulled, more preferably they are at least 80% dehulled, even more preferably they are at least 98% dehulled.

The dehulling can be carried out with an optical sorting dehulling machine which has a precision ranging from 90 to 100%.

The dehulled sunflower seeds are then mechanically deoiled and defatted, preferably with a mechanical pressing process (cold pressing), with a temperature inside the press of less than 100° C, preferably between 35° C and 60° C, so as to obtain defatted seeds (also called cake in the case of cold pressing).

According to a preferred aspect, the dehulled sunflower seeds are preheated before being introduced into the press at a temperature in the range of between 25° C and 50° C, whereas the temperature of the dehulled sunflower seeds inside the press ranges from 20° C to 100° C, preferably from 35° C to 60° C.

The mechanical pressing is carried out without the use of solvents, such as, for example, hexane, a non-food grade solvent.

Furthermore, according to a further preferred aspect, the recirculation of the pressing process can range between 0 and 70%, which means that defatted seeds that are pressed by the press will not re-enter it for subsequent pressing. Whereas in the case of 70% recirculation, 70% of the defatted seeds exiting the press will re-enter it for further pressing.

As an alternative to mechanical defatting, the defatting can be carried out with propane.

For example, the seeds are cooled to 2-5°C and micro-sliced. Then the seeds reduced into particles are defatted using propane.

According to a preferred aspect, the particle size is between 680 $\mu$m and 840 $\mu$m. According to another preferred aspect, the defatting with propane takes place at a pressure of between 5.9 and 7.6 bar.

Preferably, the temperature at which the defatting with propane takes place is between 25 and 35° C.

According to another preferred aspect, the cycle time is between 50 and 70 minutes. After the mechanical pressing or defatting with propane, the defatted seeds are ground until reaching a mean particle size preferably between 50 $\mu$m and 2 mm; according to a further preferred aspect, the mean particle size is 500 $\mu$m (meal).

According to a preferred aspect, the meal of dehulled sunflower seeds defatted mechanically or by defatting with propane has a total fat content, measured after acid hydrolysis, of less than 20%, preferably less than 10%, more preferably less than 5%.

After grinding, the meal of dehulled sunflower seeds defatted by mechanical pressing or defatting with propane is solubilized in water and then treated at room temperature with at least one sulphite of an alkali or alkaline earth metal, preferably sodium sulphite, in order to protect the chlorogenic acid present in the sunflower seeds against oxidation and thus avoid the formation of the undesirable dark green colour in the protein ingredient obtained with the method of the invention.

The sunflower seed meal is solubilized in water at a pH of between 5 and 8, preferably pH 7.0 $\pm$0.5; then at least one sulphite of an alkali or alkaline earth metal, preferably sodium sulphite, is added to the solution in an amount by weight in the range of 2 to 5%, preferably in an amount equal to 5% of the weight of the deoiled and defatted sunflower meal.

According to a preferred aspect, the pH of the solution obtained by solubilizing the sunflower seed meal in water is reached and stabilized with a solution of sodium hydroxide and hydrochloric acid, preferably with a concentration of between 0.5 and 5 M.

The solubilization of the dehulled sunflower seed meal takes place under stirring in a reactor which has a geometric structure optimized so as to favour the solubilization of the proteins and reduce exposure of the solution to oxygen. The duration of this step is determined by the time necessary in order for the solution to reach the specific pH of interest.

Optionally, the aqueous solution present in the reactor can be saturated with nitrogen ($N_2$) in order to reduce the

oxygen (O$_2$) dissolved in the water as much as possible and provide further protection against oxidation of the chlorogenic acid. Preferably, the saturation with nitrogen will take place prior to the dispersion of the meal and simultaneously with or also following solubilization of the at least one sulphite of an alkali or alkaline earth metal, preferably sodium sulphite.

The ratio by weight between the water that must be used for solubilization and the meal of sunflower seeds deoiled and defatted mechanically or by defatting with propane can range between 6:1 and 20:1 and is preferably equal to 20:1.

The ratio by weight between the amount of water to be used for solubilization and the amount of meal deoiled and defatted mechanically or by defatting with propane which must be solubilized, must take account of the previous moisture of the meal, according to the following formula:

$$Moisture_{meal}\ (g) = \frac{g\ meal * \%\ moisture}{100}$$

$$Dry\ matter_{meal} = g\ meal - moisture_{meal}\ (g)$$

$$Water_{solubilization} = (Dry\ matter_{meal}\ x\ ratio) - Moisture_{meal}\quad [\text{kg}]$$

After the treatment with the at least one sulphite of an alkali or alkaline earth metal, preferably sodium sulphite, a step 1a) of deoiling and defatting the sunflower seed meal can optionally be performed, also by means of enzymes, at room temperature. In particular, a lipase enzyme can be used, preferably a phospholipase A1 (PLA1) or triacylglycerol lipases or a combination of said lipases, which can be added to the solution containing the solubilized sunflower seed meal. The optional enzymatic deoiling and defatting of step Ia) can be carried out under stirring in a reactor that has a geometric structure optimized for an optimal solubilization of the proteins and a reduced exposure of the solution to oxygen. According to a preferred aspect, this reactor is the same as in the previous step. The ratio by weight between the amount of lipase enzyme used in the optional step la) and the amount of meal defatted mechanically or by defatting with propane can range between 0.1% and 3% and is preferably equal to 3%.

The pH of the solution containing the solubilized seed meal and the lipase is between pH 5.0 and pH 8.0, preferably pH 7.0 ±0.5. According to a preferred aspect, said pH is obtained and stabilized using a solution of sodium hydroxide and hydrochloric acid, preferably with a concentration of between 0.5 and 5 M.

The optional enzymatic deoiling and defatting step can preferably last for between 15 and 60 minutes; it preferably lasts 60 minutes.

In the subsequent step, an aqueous extraction (extractive solubilization), preferably a multi-phase extraction, of the proteins is carried out, i.e. a liquid-solid extraction to extract the proteins from the sunflower seed meal at a pH of between 8.0 and 10.0 preferably at pH 8.5 ± 0.5.

The protein extraction temperature is preferably between 50° C and 70° C; even more preferably, it is 70° C.

The pH of the solution is preferably obtained and stabilized using a solution of sodium hydroxide and hydrochloric acid, preferably with a concentration of between 0.5 and 5 M.

The water-to-meal ratio by weight can be in the range of between 10:1 and 20:1; it preferably ranges between 12:1 and 15:1.

The liquid-solid extraction is carried out under stirring, preferably by means of a blade stirrer or a high-speed homogenizer, in the same reactor as in the previous step.

The stirring can be carried out at a speed of between 60 and 500 rpm.

The liquid-solid extraction can be carried out in a time interval of between 15 and 60 minutes, preferably 60 minutes.

At the end of every liquid-solid extraction step, a liquid-solid separation can be performed, for example using a two-phase decanter centrifuge, to separate the supernatant rich in proteins from the remaining solid rich in fibres.

The centrifuge can be set on different RCF values, which can range from 2500 RCF to 10000 RCF.

Preferably, at least two liquid-solid extraction (extractive solubilization) steps are performed on the solution containing the seed meal, preferably up to a maximum of five successive liquid-solid extraction steps. In every step, the solids are separated with a centrifuge, for example a decanter centrifuge or a similar machine, and are then reused in the subsequent step of extractive solubilization of the proteins using the same operating conditions as used previously.

According to a preferred aspect, at least two liquid-solid extraction steps are carried out with a specific water:meal ratio, at a pH of between 8.0 and 10.0, preferably a pH of 8.5 ± 0.5, and at a temperature between 50° C and 70° C, preferably 70° C.

In the water/meal ratio of the second extraction (extractive solubilization) it is necessary to consider the moisture of the solid residue using the formula shown below:

$$Water_{solid\ residue}\ (g) = \frac{g\ residue * \%\ moisture}{100}$$

$$Dry\ matter_{solid\ residue} = g\ residue - water_{solid\ residue}\ (g)$$

$$Water_{solubilization} = (Dry\ matter_{solid\ residue}\ x\ ratio) - Water_{solid\ residue}\ (g)$$
$$[kg]$$

According to a preferred aspect, in order to obtain a protein isolate (instead of a concentrate) with the method of the invention, a skimming step by centrifugation can be carried out on the separated supernatant after step III. For the skimming, use can be made of a centrifuge, for example a disk centrifuge, preferably set on RCF values of between 8000 g and 13000 g, preferably between 11000 and 12000 g.

According to a more preferred aspect, the skimming step is performed by centrifugation on the supernatant separated after the first extraction. The oily phase, lighter, is thus discarded, while the remaining, heavier phase, rich in proteins, is used for the second liquid-solid extraction.

In order to obtain an even lighter colour in the final protein ingredient, it is possible to apply a further optional decolorization. The decolorization can be performed, for example, using activated charcoal, polyvinylpolypyrrolidone (PVPP) or bleaching earths, such as, for example, diatomaceous earth.

If activated charcoal is used, the supernatant rich in proteins obtained in the previous step is filtered through food-grade activated charcoal, for example using decolorization columns, with a dwell time of between 30 seconds and 20 minutes. On the other hand, if PVPP is used, said compound is added to the supernatant rich in proteins obtained in the previous step, in an amount of between 40 g/hL and 80 g/hL (weight/vol), preferably 80 g/hL, with a duration of between 30 and 90 minutes.

If diatomaceous earth is used, said compound is added to the supernatant rich in proteins obtained in the previous step, in an amount of between 0.3% and 1% of the weight of the supernatant, preferably 0.5%, with a duration of between 20 and 90 minutes and a temperature of between 50°C and 70°C.

After the extractive solubilization, preferably multi-phase, of the proteins and the optional further decolorization, precipitation of the proteins takes place.

The precipitation of the proteins takes place under stirring at room temperature and an acidic pH at the isoelectric point of sunflower proteins, preferably at a pH of between 3.25 and 5.75. In particular, according to a preferred aspect, the pH is modified and stabilized at a value of between pH 4.0 and pH 5.0 using a solution of hydrochloric acid and sodium hydroxide, preferably with a concentration of between 0.5 and 5 M.

The precipitation can last from 15 to 60 minutes, preferably 60 minutes.

According to a preferred aspect, the precipitation of the proteins can take place under stirring in the same reactor in which treatment with the at least one sulphite of an alkali or alkaline earth metal, preferably sodium sulphite, takes place, or in another reactor that is distinct from the previous one but has the same characteristics in terms of a geometric form optimized so as to reduce exposure of the solution to oxygen.

The stirring can be carried out using a blade stirrer or a high-speed homogenizer at a speed of between 60 and 500 rpm.

Then, the liquid-solid separation of the proteins takes place; it can be carried out using a centrifuge, for example, an automatic discharge centrifuge or a decanter centrifuge, to separate the proteins precipitated from the liquid. The feed rate and other operating parameters can be modified during the method based on the desired degree of separation.

The centrifuge can be set at different revolutions per minute (rpm) and gravitational accelerations, which can range between 2,500 and 18,000 RCF.

In one embodiment, the proteins precipitated and separated can be washed with water at room temperature under stirring, with a specific water-to-precipitate ratio which must take account of the previous moisture of the precipitate.

The pH of the washing water is between pH 3.25 and pH 5.75 and preferably said pH is obtained and stabilized using a solution of sodium hydroxide and hydrochloric acid, preferably employing stock solutions with a concentration of between 0.5 and 5M.

Preferably, the water-to-precipitate ratio by weight can range between 7:1 and 15:1; it is preferably 15:1.

In the water-to-precipitate ratio, the moisture of the precipitate must be considered using the formula shown below:

$$Water_{precipitate}\ (g) = \frac{g\ precipitate * \%\ moisture}{100}$$

$$Dry\ matter_{precipitate} = g\ precipitate - water_{precipitate}\ (g)$$

$$Water_{washing} = \left(Dry\ matter_{precipitate}\ x\ Ratio\right) - Water_{precipitate}\quad [kg]$$

The duration of the washing can be between 15 and 60 minutes; it is preferably 60 minutes.

Stirring is carried out using a blade stirrer or a high-speed homogenizer with a speed of between 60 and 500 rpm.

At the end of the washing step, the proteins are again separated from the liquid mass by means of a centrifuge, for example an automatic discharge centrifuge or a decanter centrifuge. The feed rate and other operating parameters can be modified during the method based on the desired degree of separation.

The centrifuge can be set at different revolutions per minute (rpm) and gravitational accelerations, which can range between 2,500 and 18,000 RCF.

Subsequently, a treatment with hydrogen peroxide is performed under acidic conditions, preferably at a pH $\leq$ 4.25, even more preferably at a pH between pH 3.25 and pH $\leq$ 4.25, in order to decrease the sulphur dioxide (allergenic) formed previously with the at least one sulphite of an alkali or alkaline earth metal, preferably sodium sulphite. The amount of sulphur dioxide is decreased to below the threshold of tolerance of 10 mg/kg and is preferably eliminated altogether. In fact, according to the food safety standards in force in the European Union, if greater than 10 mg/kg, the sulphur dioxide must be declared on the label, because it provokes allergic reactions. The measurements of the sulphur dioxide in the ingredient of the invention are made using the method of EN 1988-1:1998.

The precipitated proteins, optionally subjected to washing, are suspended in water, preferably with a water/precipitated proteins ratio by weight that is in the range of between 3:1 and 10:1, preferably 10:1.

According to a preferred aspect, the pH of this solution must be between 3.25 and 4.25, and in any case it must be brought to or maintained at pH $\leq$ 4.5. In fact, the reaction between the sulphites and hydrogen peroxide is a redox reaction whose equilibrium shifts towards sulphates under acidic conditions.

A solution of hydrogen peroxide is then added to the suspension in a concentration of between 8 and 35% to decrease the amount of sulphur dioxide present.

The amount of hydrogen peroxide that is added must be calculated on the basis of the moles of sulphur dioxide present in the suspension as a whole. The amount of hydrogen peroxide is calculated in moles according to a multiplication factor of between x10 and x35 relative to the moles of sulphur dioxide detected in the suspension as a whole, as expressed in the following equation:

$$Moles\ of\ H_2O_2\ to\ be\ added = moles\ of\ SO_2\ in\ the\ mixture * x$$

*Where* $10 \leq x \leq 35$

The duration of the sulphur dioxide reduction step is preferably in a time interval of between 10 and 30 minutes.

In this step it is possible to use a high-speed homogenizer up to 10,000 rpm.

At this point of the method of the invention, a step of neutralising the precipitated protein product can be carried out, under stirring. During the neutralization step, the solution is brought up to a pH of between pH 6.0 and pH 7.5 preferably a pH equal to 7.0 $\pm$ 0.5, preferably using a solution of sodium hydroxide with a concentration that can range from 0.5 to 5 M.

The neutralization step can have a variable duration depending on the time necessary to reach the desired pH and it can preferably last up to 30 minutes.

In this step as well, it is possible to use a high-speed homogenizer up to 10,000 rpm.

Stirring is carried out with a blade stirrer or a high-speed homogenizer with a speed of between 60 rpm and 500 rpm.

After the neutralization of the precipitate, the method of the invention comprises the enzymatic degradation (decomposition) of the hydrogen peroxide still present, at room temperature. The enzyme catalase is thus added to the neutralized mixture to decompose the residual hydrogen peroxide, in an amount, multiplied by a factor of 4, which is calculated on the basis of the amount of hydrogen peroxide added previously, the concentration of the stock solution of the enzyme and the reaction time, as expressed in the formula below, where CIU/g indicates the catalytic international units/g of enzyme, and where 1 CIU of catalase decomposes 1 micromole of $H_2O_2$ per minute:

$$Catalase\ (g) = \frac{H_2O_2\ \mu moles}{catalase\ activity\ [value]\left(\frac{CIU}{g}\right) * minutes\ of\ reaction} * 4$$

The decomposition of the hydrogen peroxide takes place upon the formation of a layer of foam, caused by the production of molecular oxygen.

The pH ranges from pH 6.0 ± 0.5 to pH 7.0 ± 0.5.

The step of enzymatic decomposition of the hydrogen peroxide can last from 5 minutes to the maximum necessary time, which can range from 5 minutes to 60 minutes.

An optional pasteurization of the neutralized suspension can then be carried out, in accordance with food safety guidelines, in particular in the framework of the Hazard Analysis and Critical Control Points (HACCP) method. Pasteurization thus represents a critical control point.

The pasteurization step can take place at a temperature of between 60°C and 120°C, for a duration of several seconds. Preferably, in the case of flash pasteurization, the pasteurization is carried out for 15-60 seconds.

Finally, a drying step can be performed to obtain a final product, i.e. a protein ingredient, with a specific moisture, in powder form.

According to a preferred aspect, the moisture content of the final product is equal to or less than 5%, even more preferably less than 3%.

The spray drying or freeze-drying technique can be used.

In the case of spray drying, the flow rate and other operating parameters can be modified during the process based on the degree of drying desired. The model of the nozzles and of the spray dryer can influence this step; therefore, the spray dryer must be chosen according to the target that has been set for the drying. Preferably, the inlet air temperature can range between 120° C and 200° C, whilst the outlet air temperature can range between 60° and 100° C.

In the case of freeze-drying, the temperature can range between -60° C and - 50° C, whilst the pressure can range between 0 mBar and 1.5 mBar.

According to a preferred aspect, the water used in the method of the invention is deionized water.

Advantageously, the method of the invention uses no solvents other than water; water is thus the only solvent used for protein extraction and purification.

Furthermore, in the method of the invention no use is made of any method involving ultrafiltration, diafiltration, chromatography columns and/or membranes for the purification and concentration of the sunflower proteins. In fact, any membranes used in the method of the invention can be conveniently employed for the recovery of wastewater, but they are not necessary for the concentration of the sunflower proteins.

Advantageously, the method of the invention comprises an optimized extraction, preferably a multi-phase extraction, with water at a pH of between 8.0 and 10.00 preferably a pH of 8.5 ± 0.5, which optimizes the method in terms of robustness and ease of production on an industrial scale, as it no longer entails the classic hidden costs tied to the use of the abovementioned methods, such as, for example: continual obstruction of the membranes, need for repeated cleaning, strong dependency on the specific parameters of the production lot, need for replacement interventions, etc., with consequent effects on the OpEx of the industrial plant.

The method of the invention is in fact easily scalable on an industrial level.

According to a preferred embodiment, the method for obtaining a protein ingredient from a meal of dehulled sunflower seeds defatted mechanically or by defatting with propane comprises the following sequential steps, carried out in accordance with what has been indicated above:

- dehulling of the sunflower seeds;
- mechanical defatting or defatting with propane of the dehulled sunflower seeds until obtaining defatted seeds (cake);
- grinding of the defatted seeds and obtainment of a dehulled, defatted sunflower seed meal;
- further separation of the fats of the sunflower seed meal by solubilization of the sunflower seed meal in water at a pH of between 5 and 8 and addition of at least one sulphite of an alkali or alkaline earth metal;
- enzymatic deoiling and defatting;
- aqueous extraction of the proteins at an alkaline pH and precipitation of the proteins at an acidic pH;
- addition of hydrogen peroxide at an acidic pH and neutralization of the precipitate;
- enzymatic degradation of the residual hydrogen peroxide.

According to a more preferred embodiment, the method to obtain a protein ingredient from a meal of dehulled sunflower seeds defatted mechanically or by defatting with propane comprises the following sequential steps, carried out in accordance with what has been indicated above:

- dehulling of the sunflower seeds;
- mechanical defatting or defatting with propane of the dehulled sunflower seeds until obtaining defatted seeds (cake);
- grinding of the defatted seeds and obtainment of a dehulled, defatted sunflower seed meal;
- solubilization of the sunflower seed meal in water at a pH of between 5 and 8 and addition of at least one sulphite of an alkali or alkaline earth metal;
- enzymatic deoiling and defatting;
- aqueous extraction of the proteins at an alkaline pH and precipitation of the proteins at an acidic pH;

- washing of the precipitate;
- addition of hydrogen peroxide at an acidic pH and neutralization of the precipitate;
- enzymatic degradation of the residual hydrogen peroxide;
- optional pasteurization;
- drying of the protein ingredient.

According to a further preferred embodiment, the method to obtain a protein ingredient from a meal of dehulled sunflower seeds defatted mechanically or by defatting with propane comprises the following sequential steps, carried out in accordance with what has been indicated above:

- dehulling of the sunflower seeds;
- mechanical defatting or defatting with propane of the dehulled sunflower seeds until obtaining defatted seeds (cake);
- grinding of the defatted seeds and obtainment of a dehulled, defatted sunflower seed meal;
- further separation of the fats of the sunflower seed meal by solubilization in water at a pH of between 5 and 8 and addition of at least one sulphite of an alkali or alkaline earth metal;
- aqueous extraction of the proteins at an alkaline pH and precipitation of the proteins at an acidic pH;
- addition of hydrogen peroxide at an acidic pH and neutralization of the precipitate;
- enzymatic degradation of the residual hydrogen peroxide.

According to a more preferred embodiment, the method to obtain a protein ingredient from a meal of dehulled sunflower seeds defatted mechanically or by defatting with propane comprises the following sequential steps carried out in accordance with what has been indicated above:

- dehulling of the sunflower seeds;
- mechanical defatting or defatting with propane of the dehulled sunflower seeds until obtaining defatted seeds (cake);
- grinding of the defatted seeds and obtainment of a dehulled, defatted sunflower seed meal;
- solubilization of the sunflower seed meal in water at a pH of between 5 and 8 and addition of at least one sulphite of an alkali or alkaline earth metal;
- aqueous extraction of the proteins at an alkaline pH and precipitation of the proteins at an acidic pH;
- washing of the precipitate;
- addition of hydrogen peroxide at an acidic pH and neutralization of the precipitate;
- enzymatic degradation of the residual hydrogen peroxide;
- optional pasteurization;
- drying of the protein ingredient.

The method of the invention advantageously makes it possible to obtain a light-coloured sunflower protein ingredient (from white-beige CIELAB 95.35, 0.47, 3.96, HEX: #f6f1ea to dove grey CIELAB 69.6, 3.43, 15.07, HEX: #bba78f) containing negligible or at least greatly reduced amounts of oxidated chlorogenic acid (responsible for dark-/green colourings) and phytic acid (which proves to be lower than 1.5 g out of 100 g of protein ingredient), with improved organoleptic properties thanks to a neutral pH between pH $6.0 \pm 0.5$ and pH $7.0 \pm 0.5$, which does not alter the pH of the food formulations produced with said protein ingredient.
The protein ingredient obtained with the method of the invention can be a protein concentrate or a protein isolate.
The protein concentrate obtainable with the method of the invention comprises sunflower proteins in a percentage by weight of at least 70% on a dry basis, and less than 80%, preferably at least 75% on a dry basis and less than 80% on a dry basis and a total fat content by weight on a dry basis of between 10% and 27%.
The protein isolate obtainable with the method of the invention comprises sunflower proteins in a percentage by weight of at least 80% on a dry basis, preferably at least 85%, more preferably at least 90% or more, and a total fat content by weight on a dry basis of between 5% and 20%.
The colour of the protein ingredient obtained with the method of the invention, protein concentrate or protein isolate is light.
The content of phytic acid of the protein ingredient is less than 1.5 g per 100 g of protein ingredient.
The protein ingredient has a neutral pH of between $6.0 \pm 0.5$ and $7.0 \pm 0.5$, has sulphur dioxide levels of less than 10 mg/Kg and preferably said sulphur dioxide is completely absent.
Furthermore, the protein ingredient comprises an amount of fibres of less than 14% by weight on a dry basis, even more preferably less than 7% by weight on a dry basis.
The protein ingredient of the invention is entirely edible and contains none of the 14 main food allergens identified in European Regulation 1169/2011.
According to a particularly preferred aspect, the sunflower protein concentrate has a protein content of at least 75% by weight on a dry basis, with a maximum moisture content of 6%, a light colour, neutral pH, and sulphur dioxide levels of less than 10 mg/Kg. Even more preferably, said sunflower protein concentrate is free of sulphur dioxide. Preferably, the total fat content by weight on a dry basis is equal to or greater than 10% and less than 27%.

According to another particularly preferred aspect, the sunflower protein isolate of the invention has a protein content at least 85% by weight on a dry basis, with a maximum moisture content of 6%, a light colour, neutral pH, and sulphur dioxide levels of less than 10 mg/Kg. Even more preferably, said sunflower protein isolate is free of sulphur dioxide. Preferably, the total fat content by weight on a dry basis is greater than 5% and less than or equal to 10%.

The protein ingredient of the invention has a solubility ranging between 6% and 40%, and is preferably equal to or greater than 10%, measured at pH 7.

The protein ingredient of the invention has a light colour, from white-beige CIELAB 95.35, 0.47, 3.96, HEX: #f6f1ea to dove grey CIELAB 69.6, 3.43, 15.07, HEX: #bba78f.

Particularly preferred PANTONE® colours of the protein ingredient obtained with the method of the invention are: PANTONE® 11-0605 TCX (CIELAB L 91.63, a 1, b 4.72), PANTONE® 11-0105 TCX (CIELAB L 90.6, a 0.57, b 9.5), and PANTONE® 13-1008 TCX (CIELAB L 82.59, a 0.97, b 13.71).

The protein ingredient of the invention advantageously has specific technical and functional properties that are useful in the food industry. In particular, these properties are at least one of the following:

- water holding capacity: it can range between 1 g and 2.5 g, preferably between 1.2 g and 1.8 g and even more preferably 1.4 g, of water is retained by 1 g of protein ingredient; and/or
- oil holding capacity: it can range between 0.6 g and 1.8 g, preferably between 0.8 g and 1.2 g and even more preferably 0.9 g of oil is retained by 1 g of protein ingredient; and/or
- capacity to create an emulsion: the thickness of the emulsified layer ranges between 35% and 90%, preferably between 50% and 70% and even more preferably is 60%, of the total volume of the water-oil-ingredient mixture; and/or
- capacity to create a gel (inverted test tube method): gel formation starting from a 12% concentration of protein ingredient in water (w/vol) in a range that can arrive up to a 45% concentration of the protein ingredient in water (w/vol). Preferably, a stable gel forms starting from a 15% concentration of the protein ingredient in water (w/vol).

By virtue of the above-described technical and functional properties and the neutral pH (which does not alter the pH or flavour of food formulations), the protein ingredient of the invention is particularly suitable for use in food or feed preparations for human and/or animal consumption.

Therefore, the subject matter of the invention also relates to the use of the protein ingredient, protein concentrate or protein isolate, of the invention in food or feed preparations for human and animal consumption.

In particular, the invention relates to the use of the protein ingredient of the invention (protein concentrate or protein isolate) in food or feed preparations for human and animal consumption, wherein the protein ingredient of the invention can be the main ingredient or a functional ingredient. In fact, the protein ingredient of the invention (protein concentrate or protein isolate) can be used as a replacement for proteins originating from other sources, or it can be used to supplement them and/or to replace other functional ingredients (e.g. lecithins as regards emulsion capacity), thus contributing to reduce the overall number of ingredients on the label of the finished product ("clean label").

Finally, disclosed are (not according to the invention) food or feed preparations comprising the protein ingredient of the invention (protein concentrate or protein isolate), said food or feed preparations preferably being a plant-based drink and even more preferably a plant-based milk substitute for human consumption.

Preferably, the protein ingredient of the invention (protein concentrate or protein isolate) is present in the plant-based milk substitutes for human consumption in a percentage amount that ranges between 2% and 5%.

Disclosed is (not according to the invention) a plant-based milk substitute (plant-based alternative) comprising the protein ingredient of the invention (protein concentrate or protein isolate), which has the following composition:

| | |
|---|---|
| - water | 91.92-87.84% |
| - sunflower protein ingredient | 4-5% |
| - inulin | 3-5% |
| - sugar | 1-2% |
| - xanthan gum | 0.08-0.16% |

Also disclosed is (not according to the invention) a cracker enriched with protein (protein cracker) comprising the protein ingredient of the invention (protein concentrate or protein isolate), which has the following composition:

| | |
|---|---|
| - Soft-wheat flour type 00 | 49-45% |

(continued)

| | |
|---|---|
| - Water at room temperature | 32.5-34% |
| - Sunflower protein ingredient | 8.6-10% |
| - Extra-virgin olive oil | 8.3-9% |
| - Salt | 1-1.2% |
| - Dry brewer's yeast | 0.3-0.4% |
| - Barley malt | 0.3-0.4% |

Also disclosed is (not according to the invention) a vegan mayonnaise enriched with sunflower proteins, comprising the protein ingredient of the invention (protein concentrate or protein isolate), which has the following percentage composition:

| | |
|---|---|
| - Water | 30-25.2% |
| - Sunflower seed oil | 61-65.8% |
| - Lemon juice | 2.5-3.5% |
| - Rice starch | 2.8-3.2% |
| - Sugar | 1.8-2.2% |
| - Salt | 0.5-1% |
| - Sunflower protein ingredient | 1-1.3% |
| - Xanthan | 0.4-0.6% |

The invention is illustrated below by means of experimental examples, which are not to be considered limiting to the scope of the invention.

**EXAMPLES**

Example 1 - extraction of sunflower seed proteins.

1600 g of sunflower seeds were dehulled and separated by an optical sorter with 95% precision. Subsequently, the 630 g of dehulled seeds were deoiled and defatted by mechanical pressing (cold pressing). The seeds were pre-heated to a temperature of 35°C and reached a temperature of 50°C inside the press. The defatted seeds thus obtained coming out of the press were ground to a mean particle size of 500 $\mu$m, so a meal of dehulled sunflower seeds defatted by mechanical pressing was obtained.

The 140 g of meal obtained showed the following percentage values:

- moisture: 10 $\pm$ 0.5 %;
- proteins as a percentage of dry matter: 50 $\pm$ 2.5 %
- extractable fats as a percentage of dry matter: 11 $\pm$ 0.55 %
- total fats following hydrolysis as a percentage of dry matter: 11 $\pm$ 0.55 %
- raw fibres as a percentage of dry matter: 6 $\pm$ 0.3 %
- ash as a percentage of dry matter: 8 $\pm$ 0.4 %

The meal was mixed with 2800 g of deionized water in 20:1 water/meal ratio; 7 g of sodium sulphite ($Na_2SO_3$) was then added in a percentage of 5% of the weight of the meal. After the mixture had been brought to pH 7.0 $\pm$ 0.5 by means of HCl 5M, 4.2 g of lipase enzyme were added in an amount equal to 3% of the weight of the meal (weight/weight) and 1 hour of mixing followed. The mixture was then heated to 70° C and the pH was brought to 8.5 $\pm$ 0.5 using NaOH 5M. After 1 hour, the mixture was separated using a centrifuge, resulting in 50 g of residue expressed as dry matter and 2400 g of supernatant. The residue (50 g of dry matter) was again dissolved in a ratio of 1 to 20 with 1000 g of water (dry weight/weight). The pH was maintained at pH 8.5 $\pm$ 0.5 using NaOH and the mixture was kept under stirring for 1 hour. The mixture was separated using a centrifuge, resulting in 25 g of residue expressed as dry matter and 600 g of supernatant. The precipitation of the proteins was observed when the 3000 g of the mixture of the two supernatants separated by centrifuging (2400 g + 600 g) were brought to pH 5.0 $\pm$ 0.5 using HCl at room temperature, while keeping the mixture under stirring for 1 hour. Finally, the proteins were separated from the wastewater using a centrifuge, resulting in 70 g of precipitate expressed as dry matter and 2700 g of supernatant. The precipitate was then dissolved in water with a deionized water/meal ratio equal to 15:1, under stirring for 1 hour at room temperature. The proteins were separated from the supernatant using a centrifuge, resulting in 250 g of precipitate and 840 g of supernatant. The precipitate was then mixed with water in a 10:1 ratio (weight of the water/wet weight of precipitate) and hydrogen peroxide was added to the mixture in a x20 concentration relative to the moles of sulphur dioxide detected; 3.1 mL of hydrogen peroxide were then added at a concentration of 30%, as 45 mg/kg of sulphite had been detected. This mixture was kept under stirring for 30 minutes; the pH was then stabilized at pH 7.0 ± 0.5 using NaOH, and the enzyme catalase was subsequently added to the neutralized mixture at room temperature. The amount of enzyme added was calculated using the following formula:

$$catalase\ (g) = \frac{4 * 10^4\ (\mu\ moles\ of\ H_2O_2)}{25000\ \left(\frac{CIU}{g}\right) * 30\ minutes}$$

The neutralized mixture was dried by means of a freeze-dryer to obtain the final product in powder form.
The 50 g of sunflower isolate obtained showed the following percentage values:

- moisture: 3.3 %
- proteins as a percentage of dry matter: 80.6% (percentage determined according to the total Kjeldahl N *6.25 method (ISO 1871:2009))
- total fats as a percentage of dry matter: 12.9%, of which the extractible amount as a percentage of dry matter: 9.6 % (percentage determined according to the method described in "Rapporti ISTISAN 1996/34 Met A page 41)
- raw fibres a percentage of dry matter: 0.6 %
- ash as a percentage of dry matter: 3.3 %

Hydrogen peroxide ($H_2O_2$) is not detectable with the method MP 0717 rev 2 2020 and sulphur dioxide is < 10 ppm as determined with the method of EN 1988-1:1998.
The colour corresponds to PANTONE 11-0105 TCX UNI EN 1988-1:1998 (CIELAB L 90.6, a 0.57, b 9.5).

Example 2 - extraction of sunflower seed proteins.

1600 g of sunflower seeds were dehulled and separated by an optical sorter with 95% precision (95% dehulling). Subsequently, the 630 g of dehulled seeds were deoiled and defatted by mechanical pressing (cold pressing). The seeds were preheated to a temperature of 35°C and reached a temperature of 50°C inside the press. The defatted seeds thus obtained coming out of the press were ground to a mean particle size of 500 $\mu$m, so a meal of dehulled sunflower seeds defatted by mechanical pressing was obtained.
The 140 g of meal obtained showed the following percentage values:

- moisture: 10 ± 0.5 %;
- proteins as a percentage of dry matter: 50 ± 2.5 %;
- extractible fats as a percentage of dry matter: 11 ± 0.55 %;
- total fats following hydrolysis as a percentage of dry matter: 11 ± 0.55 %;
- raw fibres as a percentage of dry matter: 6 ± 0.3 %;
- ash as a percentage of dry matter: 8 ± 0.4 %.

The meal was mixed with 2800 g of deionized water in a 20:1 water/meal ratio; 7 g of sodium sulphite ($Na_2SO_3$) was then added in a percentage of 5% of the weight of the meal. After the mixture had been brought to pH 7.0 ± 0.5 using HCl 5M, it was mixed for 1 hour. The mixture was then heated to 70° C and the pH was brought to 8.5 ± 0.5 using NaOH 5M. After 1 hour, the mixture was separated using a centrifuge, resulting in 50 g of residue expressed as dry matter and 2400 g of supernatant. The residue (50 g of dry matter) was again dissolved in a ratio of 1 to 20 with 1000 g of water (dry weight/weight). The pH was maintained at pH 8.5 ± 0.5 using NaOH and the mixture was kept under stirring for 1 hour. The mixture was separated using a centrifuge, resulting in 25 g of residue expressed as dry matter and 600 g of supernatant. The precipitation of the proteins was observed when the 3000 g of the mixture of the two supernatants separated by centrifuging (2400 g + 600 g) were brought to pH 5.0 ± 0.5 using HCl at room temperature, while keeping the mixture under stirring for 1 hour. Finally, the proteins were separated from the wastewater using a centrifuge, resulting in 70 g of precipitate expressed as dry matter and 2700 g of supernatant. The precipitate was then dissolved in water with a deionized water/meal ratio equal to 15:1, under stirring for 1 hour at room temperature. The proteins were separated from the supernatant using a centrifuge, resulting in 250 g of precipitate and 840 g of supernatant. The precipitate was then mixed with water in a 10:1 ratio (weight of the water/wet weight of precipitate) and hydrogen peroxide was added to the mixture in a x20 concentration relative to the moles of sulphur dioxide detected; 3.1 mL of hydrogen peroxide were then added at a concentration of 30%, as 45 mg/kg of sulphite had been detected. This mixture was kept under stirring for 30 minutes; the pH was then stabilized at pH 7.0 $\pm$ 0.5 using NaOH, and the enzyme catalase was subsequently added to the neutralized mixture at room temperature. The amount of enzyme added was calculated using the following formula:

$$catalase\ (g) = \frac{4 * 10^4\ (\mu\ moles\ of\ H_2O_2)}{25000\ \left(\frac{CIU}{g}\right) * 30\ minutes}$$

The neutralized mixture was dried by means of a spray dryer in order to obtain the final product in powder form.

The 50 g of sunflower isolate obtained showed the following percentage values:

- moisture: 3.4 %
- proteins as a percentage of dry matter: 82.2 % (percentage determined according to the total Kjeldahl N *6.25 method (ISO 1871:2009))
- total fats as a percentage of dry matter: 16.8 %, of which the extractible amount as a percentage of dry matter: 7.9 % (percentage determined according to the method described in "Rapporti ISTISAN 1996/34 Met A page 41)
- raw fibres as a percentage of dry matter: 0.6 %
- ash as a percentage of dry matter: 2.4 %

No hydrogen peroxide ($H_2O_2$) is detectable using the method MP 0717 rev 2 2020 and the sulphur dioxide is < 10 ppm as determined with the method of EN 1988-1:1998.

The colour corresponds to the values: CIELAB L 82.2, a 1.43, b 11.07.

Example 3 - analysis of the functional properties of the protein isolate obtained in example 1.

Water holding capacity

0.2 g of the sunflower protein isolate obtained in example 1 were mixed with 2 ml of deionized water in a vortex mixer for 1 minute. The mixture was then centrifuged for 15 minutes at the maximum RCF of the centrifuge (20913 RCF), at room temperature. The supernatant was then removed by overturning the test tube for 1 minute. Finally, the wet precipitate was weighed and the difference in weight compared to the starting amount of isolate was verified.

A value 1.4g/1g was obtained.

Oil holding capacity

0.2 g of the sunflower protein isolate obtained in example 1 were mixed with 2 ml of sunflower oil in a vortex mixer for 1 minute. The mixture was then centrifuged for 15 minutes at the maximum RCF of the centrifuge (20913 RCF), at room temperature. The supernatant was then removed by inverting the test tube for 1 minute. Finally, the wet precipitate was weighed and the difference in weight compared to the starting amount of isolate was verified.

A value of 0.9 g/1 g was obtained.

Capacity to create an emulsion (or emulsion capacity)

3.5 g of the sunflower protein isolate of example 1 were mixed with 50 ml of deionized water under stirring, using a high-speed homogenizer at 7,000 rpm for 30 seconds. 25 ml of sunflower oil were then slowly added to the mixture obtained, followed by further high-speed homogenization at 9,000 rpm for 30 seconds. Then, 25 ml of sunflower oil were again added slowly followed by high-speed homogenization at 9,000 rpm for 90 seconds to obtain a first emulsion. The mixture was transferred into two 50 ml test tubes and the emulsion layer created was evaluated. The emulsion was then centrifuged for 5 minutes at low RCF values of the centrifuge (218 RCF) at room temperature. The percentage of the emulsified layer remaining after centrifugation was measured; this indicates the emulsifying capacity. A result of 60% was obtained.

Capacity to create a gel (inverted test tube method)

The sunflower isolate obtained in the example 1 was mixed with deionized water in test tubes at different concentrations: 1%, 5%, 10%, 15% and 20%. In order to obtain a 10% concentration, for example, 0.5 g of the sunflower protein isolate of example 1 were mixed with 5 g of deionized water. Then the meal was solubilized using a vortex mixer and the test tubes were heated to 90° C for an hour, in a bain-marie. The test tubes were then cooled with cold water and left to rest overnight in a refrigerator at 4° C. The test tubes were then inverted, and the qualitative result for each test tube was evaluated (stable gel: mixture in a solid state; semi-gel: when the test tube is inverted, there remains a liquid mixture that flows next to a solidified part; liquid state: only the liquid mixture that flows).

With the 5 and 10% concentrations, no gel was obtained, with the 15% concentration, a semi-gel was obtained, and with the 20% concentration a stable gel was obtained.

Example 4 - determination of solubility

The solubility of the proteins was measured in a 5% meal:water (weight/volume) solution at pH 7, where the proteins were determined according to the total Kjeldahl N *6.25 method (ISO 1871:2009).

1.25g of protein ingredient in powder were dissolved in 25 mL of deionized water, the pH was brought to 7 by means of a 1M NaOH solution, and the solution was stirred for 1 hour at 225 rpm by means of a rotary stirrer. The stability of the pH was monitored throughout the solubilization time. Subsequently, the solution was centrifuged for 15 minutes at 4,500 RCF at 25°C. The supernatant was recovered and weighed. The protein content of said supernatant was then analysed using the total Kjeldahl N *6.25 method (ISO 1871:2009). Once the grams of protein ingredient (1.25 g) and the percentage of proteins in the protein ingredient were known, the following formula was applied:

$$\% \text{ solubility} = \frac{\% \text{ of proteins in the supernatant } \times \text{ g of supernatant}}{\% \text{ of proteins in protein ingredient} \times \text{ g of protein ingredient}} \times 100$$

Example 5 - preparation of a plant-based drink as an alternative to milk. (to illustrate a possible use of the sunflower protein isolate)

Percentage composition of the plant-based drink:

| | |
|---|---|
| - water | 90.6% |
| - sunflower protein isolate | 4.2% |
| - inulin | 3.6% |
| - sugar | 1.5% |
| - xanthan gum | 0.1% |

The sunflower seed isolate obtained in the example 1 was mixed with deionized water and xanthan gum was subsequently added. After the sugar and inulin had been dissolved, everything was mixed until complete homogenization. Finally, a pasteurization step was carried out for 20 minutes a 90° C. The drink must be refrigerated at a temperature of around 4° C.

Example 6 - preparation of a protein cracker. (to illustrate a possible use of the sunflower protein isolate)

Percentage composition of the preparation:

| | |
|---|---|
| - Soft-wheat flour type 00 | 48.4% |
| - Water at room temperature | 32.7% |
| - Sunflower protein isolate | 8.6% |
| - Extra-virgin olive oil | 8.6% |
| - Salt | 1.1% |
| - Dry brewer's yeast | 0.3% |
| - Barley malt | 0.3% |

1 g of brewer's yeast was dissolved in 115 g of water at room temperature and mixed with 170 g of soft-wheat flour type 00, 30 g of the sunflower seed isolate obtained in example 1 and 1 g of barley malt. Then 30 g of oil and 4 g of salt were added. The mixture was kneaded until obtaining a compact dough, which was allowed to rise for 1 hour at 28°C. The dough was rolled out and 5x12 cm rectangles were obtained; holes were pricked over the surface, and an emulsion of oil and water was prepared and brushed over the surface of the cracker. A small amount of coarse salt was added on the surface.

The product was baked at 180°C for 7-8 minutes.

Example 7 - preparation of a vegan mayonnaise. (to illustrate a possible use of the sunflower protein isolate)

Percentage composition of the preparation:

| - Water | 28% |
| - Sunflower seed oil | 61.7% |
| - Lemon juice | 3.1% |
| - Rice starch | 3.0% |
| - Sugar | 2.0% |
| - Salt | 0.7% |
| - Xanthan | 0.5% |
| - Sunflower protein ingredient | 1% |

61.7g of sunflower seed oil were first placed in a bowl and 3.1g of lemon juice were subsequently added. Then 3g of rice starch, 2g of salt, 0.5g of xanthan and 1g of sunflower protein ingredient were added. Finally, 28g of water were added and the mixture was beaten with a mixer from the bottom up until obtaining a creamy consistency.

**Claims**

1.  Method for obtaining a protein ingredient from a meal of dehulled sunflower seeds defatted mechanically or by defatting with propane, comprising the following sequential steps:

    I) solubilizing of sunflower seed meal in water, at a pH between 5.0 and 8.0, and addition of at least one sulphite of an alkali or alkaline earth metal;
    II) aqueous extraction of proteins at an alkaline pH and precipitation of proteins at an acidic pH;
    III) addition of hydrogen peroxide at an acidic pH and neutralization of the precipitate:
    IV) enzymatic degradation of residual hydrogen peroxide.

2.  Method according to claim 1, wherein, prior to step I), the dehulled sunflower seeds defatted mechanically or by defatting with propane are ground to a meal with a total fat content, measured after acid hydrolysis, of less than 20%.

3.  Method according to claim 1 or 2, wherein the at least one sulphite of an alkali or alkaline earth metal is added in step I) in an amount by weight in the range of 2 to 5%, preferably 5%, of the weight of the sunflower meal.

4.  Method according to any one of the preceding claims, wherein the at least one sulphite of an alkali or alkaline earth metal is selected from sodium sulphite, sodium bisulphite, sodium metabisulphite, calcium sulphite, calcium bisulphite, calcium metabisulphite, potassium sulphite, potassium bisulphite and/or potassium metabisulphite, preferably sodium sulphite.

5.  Method according to any one of the preceding claims, wherein after step I) and prior to step II there is a step Ia) of enzymatic deoiling and defatting.

6.  Method according to claim 5, wherein the enzymatic deoiling and defatting step Ia) is performed with a lipase enzyme.

7.  Method according to any one of the preceding claims, wherein the alkaline pH of step II) is comprised between 8.0 and 10.0 and/or the acidic pH of precipitation of step II) is comprised between 3.25 and 5.75.

8.  Method according to any one of the preceding claims, wherein step II) comprises at least two steps of aqueous extraction of the proteins at an alkaline pH.

9.  Method according to any one of the preceding claims, comprising a decolorization step after the solubilization of the proteins at an alkaline pH in step II) and prior to their precipitation at an acidic pH, preferably performed using activated charcoal, polyvinylpolypyrrolidone, or bleaching earths.

10. Method according to any one of the preceding claims, wherein the enzymatic degradation of the residual hydrogen peroxide is performed in step IV) using a catalase enzyme.

11. Method according to any one of the preceding claims, further comprising a pasteurization step after step IV).

12. Method according to any one of the preceding claims, further comprising a drying step after step IV).

13. Method according to any one of the preceding claims, further comprising a step of skimming by centrifugation performed on the separated supernatant after step II.

14. Protein concentrate from sunflower seeds obtainable according to any one of claims 1 to 12, **characterized by** a protein content by weight of at least 70% on a dry basis, and less than 80% on a dry basis, preferably at least 75% on a dry basis and less than 80% on a dry basis, and by a total fat content by weight on a dry basis of between 10% and 27%, by a colour-code L, a, b, of L between 95.35 and 69.6, a between 0.47 and 3.43 and b between 3.96 and 15.07, preferably a colour-code L, a, b, of L 91.63, a 1, b 4.72, a colour-code L, a, b, of L 90.6, a 0.57, b 9.5, a colour-code L, a, b, of L 82.59, a 0.97, b 13.71, or a colour-code L, a, b, of L 82.2, a 1.43, b 11.07, as measured according to CIELAB, by a phytic acid content of less than 1.5 g per 100 g of protein concentrate, by a neutral pH of between 6.0 ± 0.5 and 7.0 ± 0.5, by sulphur dioxide levels of less than 10 mg/kg, measured according to the method of EN 1988-1:1998, preferably said sulphur dioxide being absent, and preferably comprising an amount of fibres of less than 14% by weight on a dry basis, even more preferably less than 7% by weight on a dry basis.

15. A protein isolate from sunflower seeds obtainable according to any one of claims 1 to 13, **characterized by** a protein content by weight of at least 80% on a dry basis, preferably at least 85%, more preferably at least 90% or more, and a total fat content by weight on a dry basis of between 5% and 20%, by a colour-code L, a, b, of L between 95.35 and 69.6, a between 0.47 and 3.43 and b between 3.96 and 15.07, preferably a colour-code L, a, b, of L 91.63, a 1, b 4.72, a colour-code L, a, b, of L 90.6, a 0.57, b 9.5, a colour-code L, a, b, of L 82.59, a 0.97, b 13.71, or a colour-code L, a, b, of L 82.2, a 1.43, b 11.07, as measured according to CIELAB, by a phytic acid content of less than 1.5 g per 100 g of the protein isolate, by a neutral pH of between 6.0 ± 0.5 and 7.0 ± 0.5, by sulphur dioxide levels of less than 10 mg/kg, measured according to the method of EN 1988-1:1998, preferably said sulphur dioxide being absent, and preferably comprising an amount of fibres of less than 14% by weight on a dry basis, even more preferably less than 7% by weight on a dry basis.

16. Use of the protein concentrate of claim 14, or the protein isolate of claim 15, in food and feed preparations for human and animal consumption, preferably selected from a plant-based drink, preferably a plant-based milk substitute for human consumption, a protein cracker, and a mayonnaise for human consumption.

**Patentansprüche**

1. Methode zum Erhalten einer Proteinzutat aus einem Mehl geschälter Sonnenblumenkerne, die mechanisch oder durch Entfetten mit Propan entfettet wurden, umfassend die folgenden aufeinanderfolgenden Schritte:

   I) Solubilisieren von Sonnenblumenkernmehl in Wasser bei einem pH-Wert zwischen 5,0 und 8,0 und Zugeben von mindestens einem Sulfit eines Alkali- oder Erdalkalimetalls;
   II) wässriges Extrahieren von Proteinen bei alkalischem pH-Wert und Ausfällen von Proteinen bei saurem pH-Wert;
   III) Zugeben von Wasserstoffperoxid bei saurem pH-Wert und Neutralisieren des Niederschlags;
   IV) enzymatisches Abbauen von restlichem Wasserstoffperoxid.

2. Methode nach Anspruch 1, wobei vor Schritt I) die mechanisch oder durch Entfetten mit Propan entfetteten geschälten Sonnenblumenkerne zu einem Mehl mit einem nach saurer Hydrolyse gemessenen Gesamtfettgehalt von weniger als 20 % gemahlen werden.

3. Methode nach Anspruch 1 oder 2, wobei das mindestens eine Sulfit eines Alkali- oder Erdalkalimetalls in Schritt I) in einer Gewichtsmenge im Bereich von 2 bis 5 %, vorzugsweise 5 %, des Gewichts des Sonnenblumenmehls zugegeben wird.

4. Methode nach einem der vorhergehenden Ansprüche, wobei das mindestens eine Sulfit eines Alkali- oder Erdalkalimetalls ausgewählt ist aus Natriumsulfit, Natriumbisulfit, Natriummetabisulfit, Calciumsulfit, Calciumbisulfit, Calciummetabisulfit, Kaliumsulfit, Kaliumbisulfit und/oder Kaliummetabisulfit, vorzugsweise Natriumsulfit.

5. Methode nach einem der vorhergehenden Ansprüche, wobei nach Schritt I) und vor Schritt II ein Schritt Ia) zum enzymatischen Entölen und Entfetten erfolgt.

6. Methode nach Anspruch 5, wobei der enzymatische Entölungs- und Entfettungsschritt Ia) mit einem Lipaseenzym durchgeführt wird.

7. Methode nach einem der vorhergehenden Ansprüche, wobei der alkalische pH-Wert von Schritt II) zwischen 8,0 und 10,0 liegt und/oder der saure pH-Wert der Fällung von Schritt II) zwischen 3,25 und 5,75 liegt.

8. Methode nach einem der vorhergehenden Ansprüche, wobei Schritt II) mindestens zwei Schritte zur wässrigen Extraktion der Proteine bei einem alkalischen pH-Wert umfasst.

9. Methode nach einem der vorhergehenden Ansprüche, umfassend einen Entfärbeschritt nach der Solubilisierung der Proteine bei einem alkalischen pH-Wert in Schritt II) und vor ihrer Fällung bei einem sauren pH-Wert, vorzugsweise unter Verwendung von Aktivkohle, Polyvinylpolypyrrolidon oder Bleicherden durchgeführt.

10. Methode nach einem der vorhergehenden Ansprüche, wobei der enzymatische Abbau des restlichen Wasserstoffperoxids in Schritt IV) unter Verwendung eines Katalaseenzyms durchgeführt wird.

11. Methode nach einem der vorhergehenden Ansprüche, ferner umfassend einen Pasteurisierungsschritt nach Schritt IV).

12. Methode nach einem der vorhergehenden Ansprüche, ferner umfassend einen Trocknungsschritt nach Schritt IV) .

13. Methode nach einem der vorhergehenden Ansprüche, ferner umfassend einen Schritt zum Abschäumen durch Zentrifugation, der an dem abgetrennten Überstand nach Schritt II durchgeführt wird.

14. Proteinkonzentrat aus Sonnenblumenkernen, erhältlich nach einem der Ansprüche 1 bis 12, **gekennzeichnet durch** einen Proteingehalt von mindestens 70 Gew.- % auf Trockenbasis und weniger als 80 Gew.- % auf Trockenbasis, vorzugsweise mindestens 75 Gew.- % auf Trockenbasis und weniger als 80 Gew.- % auf Trockenbasis, und durch einen Gesamtfettgehalt auf Trockenbasis zwischen 10 Gew.- % und 27 Gew.- %, durch einen Farbcode L, a, b, wovon L zwischen 95,35 und 69,6, a zwischen 0,47 und 3,43 und b zwischen 3,96 und 15,07, vorzugsweise einen Farbcode L, a, b, wovon L 91, 63, a 1, b 4, 72, einen Farbcode L, a, b, wovon L 90,6, a 0,57, b 9,5, einen Farbcode L, a, b, wovon L 82,59, a 0,97, b 13,71, oder einen Farbcode L, a, b, wovon L 82,2, a 1,43, b 11,07, gemessen nach CIELAB, durch einen Phytinsäuregehalt von weniger als 1,5 g pro 100 g Proteinkonzentrat, durch einen neutralen pH-Wert zwischen $6,0 \pm 0,5$ und $7,0 \pm 0,5$, durch Schwefeldioxidanteile von weniger als 10 mg/kg, gemessen nach der Methode von EN 1988-1:1998, wobei das Schwefeldioxid vorzugsweise fehlt, und vorzugsweise umfassend eine Menge an Fasern von weniger als 14 Gew.-% auf Trockenbasis, noch bevorzugter weniger als 7 Gew.-% auf Trockenbasis.

15. Proteinisolat aus Sonnenblumenkernen, erhältlich nach einem der Ansprüche 1 bis 13, **gekennzeichnet durch** einen Proteingehalt von mindestens 80 Gew.- % auf Trockenbasis, vorzugsweise mindestens 85 %, bevorzugter mindestens 90 % oder mehr, und einen Gesamtfettgehalt auf Trockenbasis zwischen 5 Gew.- % und 20 Gew.- %, durch einen Farbcode L, a, b, wovon L zwischen 95,35 und 69,6, a zwischen 0,47 und 3,43 und b zwischen 3,96 und 15,07, vorzugsweise einen Farbcode L, a, b, wovon L 91,63, a 1, b 4,72, einen Farbcode L, a, b, wovon L 90,6, a 0,57, b 9,5, einen Farbcode L, a, b, wovon L 82,59, a 0,97, b 13,71, oder einen Farbcode L, a, b, wovon L 82,2, a 1,43, b 11,07, gemessen nach CIELAB, durch einen Phytinsäuregehalt von weniger als 1,5 g pro 100 g des Proteinisolats, durch einen neutralen pH-Wert zwischen $6,0 \pm 0,5$ und $7,0 \pm 0,5$, durch Schwefeldioxidanteile von weniger als 10 mg/kg, gemessen nach der Methode von EN 1988-1:1998, wobei das Schwefeldioxid vorzugsweise fehlt, und vorzugsweise umfassend eine Menge an Fasern von weniger als 14 Gew.- % auf Trockenbasis, noch bevorzugter weniger als 7 Gew.- % auf Trockenbasis.

16. Verwendung des Proteinkonzentrats nach Anspruch 14 oder des Proteinisolats nach Anspruch 15 in Lebens- und Futtermittelzubereitungen für den menschlichen und tierischen Verzehr, vorzugsweise ausgewählt aus einem pflanzlichen Getränk, vorzugsweise einem pflanzlichen Milchersatz für den menschlichen Verzehr, einem Proteincracker und einer Mayonnaise für den menschlichen Verzehr.

**Revendications**

1. Procédé d'obtention d'un ingrédient protéinique à partir d'une farine de graines de tournesol décortiquées, dégraissées mécaniquement ou par dégraissage au propane, comprenant les étapes séquentielles suivantes :

   I) solubiliser la farine de graines de tournesol dans l'eau, à un pH compris entre 5,0 et 8,0, et ajout d'au moins un sulfite d'un métal alcalin ou alcalino-terreux ;
   II) extraction aqueuse des protéines à un pH alcalin et précipitation des protéines à un pH acide ;
   III) ajout de peroxyde d'hydrogène à un pH acide et neutralisation du précipité ;
   IV) dégradation enzymatique du peroxyde d'hydrogène résiduel.

2. Procédé selon la revendication 1, dans lequel, avant l'étape I), les graines de tournesol décortiquées dégraissées mécaniquement ou par dégraissage au propane sont broyées en une farine dont la teneur totale en matières grasses, mesurée après hydrolyse acide, est inférieure à 20 %.

3. Procédé selon la revendication 1 ou 2, dans lequel l'au moins un sulfite d'un métal alcalin ou alcalino-terreux est ajouté à l'étape I) dans une quantité en poids comprise entre 2 et 5 %, de préférence 5 %, du poids de la farine de tournesol.

4. Procédé selon l'une quelconque des revendications précédentes, dans lequel l'au moins un sulfite d'un métal alcalin ou alcalino-terreux est choisi parmi le sulfite de sodium, le bisulfite de sodium, le métabisulfite de sodium, le sulfite de calcium, le bisulfite de calcium, le métabisulfite de calcium, le sulfite de potassium, le bisulfite de potassium et/ou le métabisulfite de potassium, de préférence le sulfite de sodium.

5. Procédé selon l'une quelconque des revendications précédentes, dans lequel, après l'étape I) et avant l'étape II, il existe une étape Ia) de déshuilage et de dégraissage enzymatique.

6. Procédé selon la revendication 5, dans lequel l'étape Ia) de déshuilage et de dégraissage enzymatique est réalisée avec une enzyme lipase.

7. Procédé selon l'une quelconque des revendications précédentes, dans lequel le pH alcalin de l'étape II) est compris entre 8, 0 et 10,0 et/ou le pH acide de précipitation de l'étape II) est compris entre 3,25 et 5, 75.

8. Procédé selon l'une quelconque des revendications précédentes, dans lequel l'étape II) comprend au moins deux étapes d'extraction aqueuse des protéines à un pH alcalin.

9. Procédé selon l'une quelconque des revendications précédentes, comprenant une étape de décoloration après la solubilisation des protéines à un pH alcalin dans l'étape II) et avant leur précipitation à un pH acide, de préférence réalisée à l'aide de charbon actif, de polyvinylpolypyrrolidone ou de terres décolorantes.

10. Procédé selon l'une quelconque des revendications précédentes, dans lequel la dégradation enzymatique du peroxyde d'hydrogène résiduel est réalisée à l'étape IV) à l'aide d'une enzyme catalase.

11. Procédé selon l'une quelconque des revendications précédentes, comprenant en outre une étape de pasteurisation après l'étape IV).

12. Procédé selon l'une quelconque des revendications précédentes, comprenant en outre une étape de séchage après l'étape IV).

13. Procédé selon l'une quelconque des revendications précédentes, comprenant en outre une étape d'écrémage par centrifugation effectuée sur le surnageant séparé après l'étape II.

14. Concentré de protéines issu de graines de tournesol pouvant être obtenu selon l'une quelconque des revendications 1 à 12, **caractérisé par** une teneur en protéines en poids d'au moins 70 % sur une base sèche et inférieure à 80 % sur une base sèche, de préférence d'au moins 75 % sur une base sèche et inférieure à 80 % sur une base sèche, et par une teneur totale en matières grasses en poids sur une base sèche comprise entre 10 % et 27 %, par un code couleur L, a, b, de L compris entre 95,35 et 69,6, a compris entre 0,47 et 3,43 et b compris entre 3,96 et 15,07, de préférence un code couleur L, a, b, de L 91,63, a 1, b 4,72, un code couleur L, a, b, de L 90,6, a 0,57, b 9,5, un code couleur L, a, b, de L 82,59, a 0,97, b 13,71, ou un code couleur L, a, b, de L 82,2, a 1,43, b 11,07, tels que mesurés selon CIELAB, par une teneur en acide phytique inférieure à 1,5 g pour 100 g de concentré de protéines, par un pH neutre compris entre 6,0 ± 0,5 et 7,0 ± 0,5, par des niveaux de dioxyde de soufre inférieurs à 10 mg/kg, mesurés selon la méthode EN 1988-1:1998, ledit dioxyde de soufre étant de préférence absent, et comprenant de préférence une quantité de fibres inférieure à 14 % en poids sur une base sèche, encore plus préférablement inférieure à 7 % en poids sur une base sèche.

15. Isolat de protéines issu de graines de tournesol pouvant être obtenu selon l'une quelconque des revendications 1 à 13, **caractérisé par** une teneur en protéines en poids d'au moins 80 % sur une base sèche, de préférence d'au moins 85 %, plus préférablement d'au moins 90 % ou plus, et une teneur totale en matières grasses en poids sur une base sèche comprise entre 5 % et 20 %, par un code couleur L, a, b, de L compris entre 95,35 et 69,6, a entre 0,47 et 3,43 et b entre 3,96 et 15,07, de préférence un code couleur L, a, b, de L 91,63, a 1, b 4,72, un code couleur L, a, b, de L 90,6, a 0,57, b 9,5, un code couleur L, a, b, de L 82,59, a 0,97, b 13,71, ou un code couleur L, a, b, de L 82,2, a 1,43, b 11,07, tels que mesurés selon CIELAB, par une teneur en acide phytique inférieure à 1,5 g pour 100 g d'isolat de protéines, par un pH neutre compris entre 6,0 ± 0,5 et 7,0 ± 0,5, par des niveaux de dioxyde de soufre inférieurs à 10 mg/kg, tels que mesurés selon la méthode EN 1988-1:1998, ledit dioxyde de soufre étant de préférence absent, et comprenant de préférence une quantité de fibres inférieure à 14 % en poids sur une base sèche, encore plus préférablement inférieure à 7 % en poids sur une base sèche.

16. Utilisation du concentré de protéines selon la revendication 14, ou de l'isolat de protéines selon la revendication 15, dans des préparations alimentaires et de fourrage destinées à la consommation humaine et animale, de préférence choisies parmi une boisson à base de plantes, de préférence un substitut de lait à base de plantes destiné à la consommation humaine, un cracker protéiné et une mayonnaise destinée à la consommation humaine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3622556 A
- US 3993636 A, Maubois
- US 4435319 A
- EP 3295803 A
- EP 3669662 A, Galet
- US 2022007679 A
- RU 2767364

**Non-patent literature cited in the description**

- **POORE et al.** *Science*, 2018, vol. 360, 987-992
- *J. Phys. Chem.*, 1975, vol. 79 (20), 2096-2098
- **SAEED** ; **CHERYAN**. Sunflower Protein Concentrates and Isolates' Low in Polyphenols and Phytate. *Journal of Food Science*, 1988, vol. 53 (4), 1127-1131
- **PICKARDT et al.** Optimization of mild-acidic protein extraction from defatted sunflower (Helianthus annuus L.) meal. *Food Hydrocolloids*, 2009, vol. 23 (7), 1966-1973
- *Rapporti ISTISAN 1996/34 Met*, 41